# EUROPEAN PATENT APPLICATION

(11) **EP 4 485 597 A2**
(43) Date of publication of application: **01.01.2025**
(21) Application number: 24185411.6
(22) Date of filing: 28.06.2024
(51) Int. Cl.: H01M 10/04, H01M 10/0587

(54) **METHOD FOR WINDING CELL AND SYSTEM FOR WINDING CELL**

(30) Priority: 29.06.2023 CN 202310787846
(71) Applicant: Xiamen Hithium Energy Storage Technology Co., Ltd., Xiamen, Fujian 361100 (CN)
(72) Inventor: LIU, Shaojie, Xiamen, 361100 (CN); YAN, Kun, Xiamen, 361100 (CN); WANG, Chenyu, Xiamen, 361100 (CN)
(74) Representative: Mewburn Ellis LLP

(57) **Abstract**

A method for cell winding and a system for cell winding are provided. The method includes feeding materials, preparing winding, embossing, and winding. The feeding materials is carried out to obtain a separator, a cathode electrode, and an anode electrode, where the cathode electrode satisfies that: after pre-winding, a first cathode tab of the cathode electrode and a second cathode tab of the cathode electrode are arranged with a surplus misalignment. A starting end of the separator, a starting end of the cathode electrode, and a starting end of the anode electrode are fixed to a winding device. The cathode electrode is embossed by a rolling device, such that the first cathode tab is aligned with the second cathode tab after winding. The embossing is configured to enable the surplus misalignment between the first cathode tab and the second cathode tab after the winding to be zero.

## Description

### TECHNICAL FIELD

The disclosure relates to the field of cell winding technologies, and in particular, to a method for cell winding and a system for cell winding.

### BACKGROUND

An alignment of tabs of a cell may impact the electrical performance of a finished battery. Taking cathode tabs as an example, a misalignment amount of the cathode tabs is typically controlled in a process and serves as an indicator of tab misalignment. However, during winding, since there is a difference in a thickness of the electrode, the tab misalignment of the cell may still occur with an increase in the number of winding circles, resulting in an adverse effect on a yield of the cell.

In the related art, the tab misalignment can be reduced by obtaining and calculating tab misalignments in previous windings of multiple cells and then adjusting and fixing relevant parameters of embossing processing. However, obtaining and calculating the tab misalignments in previous windings of multiple cells requires processing of a large amount of data. Moreover, since positions of thick portions and thin portions of a feeding electrode are uncertain, only adjusting the relevant parameters of the embossing processing by analyzing previous data to reduce the tab misalignment may easily cause the thick portions of the electrode to be thicker and the thin portions of the electrode to be thinner, which may increase the misalignment amount of tabs after cell winding, resulting in a decrease in a winding yield of the cell.

Therefore, how to design a method for cell winding and a system for cell winding to reduce the misalignment amount of tabs and further improve the winding yield of the cell becomes an urgent technical problem to be solved.

### SUMMARY

In a first aspect, the disclosure provides a method for cell winding. The method includes feeding materials, preparing winding, embossing, and winding.

The feeding materials includes obtaining a separator, a cathode electrode, and an anode electrode. The cathode electrode satisfies that: after pre-winding, a first cathode tab of the cathode electrode and a second cathode tab of the cathode electrode adjacent to the first cathode tab, adjacent to a winding end of the cathode electrode, are arranged with a surplus misalignment.

The preparing winding includes fixing a starting end of the separator, a starting end of the cathode electrode, and a starting end of the anode electrode to a winding device.

The embossing includes embossing the cathode electrode by a rolling device, such that the cathode electrode subjected to embossing satisfies that: the first cathode tab is aligned with the second cathode tab after winding. During the embossing, an embossing depth required by the cathode electrode is calculated based on the surplus misalignment formed by the pre-winding, to enable the first cathode tab and the second cathode tab, that are adjacent to the winding end of the cathode electrode, to be aligned with each other after the winding.

The winding includes winding the separator, the cathode electrode, and the anode electrode by the winding device to form a cell.

In a second aspect, a system for cell winding is further provided. The system for cell winding includes a feeding device, a rolling device, and a winding device.

The feeding device is configured to provide a separator, a cathode electrode, and an anode electrode. The cathode electrode satisfies that: after pre-winding, a first cathode tab of the cathode electrode and a second cathode tab of the cathode electrode adjacent to the first cathode tab, adjacent to a winding end of the cathode electrode, are arranged with a surplus misalignment.

The rolling device is configured to emboss the cathode electrode, such that the cathode electrode subjected to embossing satisfies that: the first cathode tab is aligned with the second cathode tab after winding.

The winding device is configured to fix a starting end of the separator, a starting end of the cathode electrode, and a starting end of the anode electrode, and to wind the separator, the cathode electrode, and the anode electrode.

In a third aspect, a method for cell winding is further provided in the disclosure. The method includes pre-winding, feeding materials, preparing winding, embossing, and winding. The pre-winding includes obtaining and pre-winding an experimental separator, an experimental cathode electrode, and an experimental anode electrode; where after the pre-winding is completed, each two adjacent cathode tabs on the experimental cathode electrode are arranged with a surplus misalignment.

The feeding materials includes obtaining a production separator, a production cathode electrode, and a production anode electrode; where the production cathode electrode obtained satisfies that a distance between each two cathode tabs on the production cathode electrode is equal to a distance between the each two cathode tabs on the experimental cathode electrode.

The preparing winding includes fixing a starting end of the production separator, a starting end of the production cathode electrode, and a starting end of the production anode electrode to a winding device.

The embossing includes embossing the production cathode electrode by a rolling device to enable the production cathode electrode subjected to embossing to satisfy that: cathode tabs on the production cathode electrode are aligned with each other after winding; where during the embossing, an embossing depth required by the production cathode electrode is calculated based on the surplus misalignment between the each two adjacent cathode tabs on the experimental cathode electrode after the pre-winding, to enable the each two adjacent cathode tabs on the production cathode electrode to be aligned with each other after the winding.

The winding includes winding the production separator, the production cathode electrode, and the production anode electrode by the winding device to form a cell.

In a fourth aspect, a system for cell winding is further provided. The system includes a pre-winding device, a feeding device, a rolling device, and a winding device.

The pre-winding device is configured to obtain an experimental separator, an experimental cathode electrode, and an experimental anode electrode and to complete a pre-winding, where after the pre-winding is completed, each two adjacent cathode tabs on the experimental cathode electrode are arranged with a surplus misalignment;

The feeding device is configured to provide a production separator, a production cathode electrode, and a production anode electrode, where the production cathode electrode provided satisfies that: a distance between each two adjacent cathode tabs on the production cathode electrode is equal to a distance between the each two adjacent cathode tabs on the experimental cathode electrode;

The rolling device is configured to emboss the production cathode electrode to enable the production cathode electrode subjected to embossing to satisfy that: cathode tabs on the production cathode electrode are aligned with each other after winding.

The winding device is configured to fix a starting end of the production separator, a starting end of the production cathode electrode, and a starting end of the production anode electrode and to wind the production separator, the production cathode electrode, and the production anode electrode.

### BRIEF DESCRIPTION OF THE DRAWINGS

In order to describe technical solutions in embodiments of the disclosure more clearly, the following will give a brief introduction to accompanying drawings required for describing embodiments or the related art. Apparently, the accompanying drawings hereinafter described merely illustrate some embodiments of the disclosure. Based on these drawings, those of ordinary skill in the art can also obtain other drawings without creative effort.
FIG. 1 is a schematic flow chart of a method for cell winding according to an embodiment of the disclosure.
FIG. 2 is a schematic diagram of a system for cell winding according to an embodiment of the disclosure.
FIG. 3 is a schematic diagram of a cell after winding according to an embodiment of the disclosure.
FIG. 4 is a schematic diagram of a cathode electrode in an unwinding state according to an embodiment of the disclosure.
FIG. 5 is a schematic diagram of a rolling device according to an embodiment of the disclosure.
FIG. 6 is a schematic flow chart of a method for cell winding according to another embodiment of the disclosure.
FIG. 7 is a schematic diagram illustrating winding of a cathode electrode in a desired state according to an embodiment of the disclosure.
FIG. 8 is a schematic diagram illustrating winding of a cathode electrode with a surplus misalignment according to an embodiment of the disclosure.
FIG. 9 is a schematic diagram illustrating winding of a cathode electrode subjected to embossing according to an embodiment of the disclosure.
FIG. 10 is a flow chart of determining an embossing pressure according to an embodiment of the disclosure.
FIG. 11 is a graph illustrating a correspondence between an embossing depth and an embossing pressure according to an embodiment of the disclosure.
FIG. 12 is a schematic flow chart of determining a distance between tabs on a cathode electrode, other than a first cathode tab and a second cathode tab, according to an embodiment of the disclosure.
FIG. 13 is a schematic flow chart of determining a distance between a first cathode tab and a second cathode tab on a cathode electrode according to an embodiment of the disclosure.
FIG. 14 is a graph illustrating a correspondence between a misalignment amount of cathode tabs and an embossing pressure according to an embodiment of the disclosure.
FIG. 15 is a schematic flow chart of determining a distance between tabs on a cathode electrode, other than a first cathode tab and a second cathode tab, according to another embodiment of the disclosure.
FIG. 16 is a schematic flow chart of determining a distance between a first cathode tab and a second cathode tab on a cathode electrode according to another embodiment of the disclosure.
FIG. 17 is a graph illustrating a correspondence between a misalignment amount of anode tabs and an embossing pressure according to an embodiment of the disclosure.
FIG. 18 is a schematic flow chart of determining a distance between tabs on a cathode electrode, other than a first cathode tab and a second cathode tab, according to yet another embodiment of the disclosure.
FIG. 19 is a schematic flow chart of a method for cell winding according to another embodiment of the disclosure.
FIG. 20 is a schematic flow chart of a method for cell winding according to another embodiment of the disclosure.
FIG. 21 is a schematic flow chart of aligning a first cathode tab and a second cathode tab on a cathode electrode with each other according to another embodiment of the disclosure.
FIG. 22 is a schematic flow chart of aligning cathode tabs, other than a first cathode tab and a second cathode tab, on a cathode electrode with each other according to another embodiment of the disclosure.
FIG. 23 is a schematic flow chart of obtaining a correspondence between a misalignment amount of cathode tabs and an embossing pressure according to another embodiment of the disclosure.
FIG. 24 is schematic flow chart of obtaining a correspondence between a misalignment amount of anode tabs and an embossing pressure according to another embodiment of the disclosure.

### DETAILED DESCRIPTION

The following will illustrate clearly and completely technical solutions of embodiments of the disclosure with reference to accompanying drawings of embodiments of the disclosure. Apparently, embodiments illustrated herein are merely some, rather than all embodiments, of the disclosure. Based on the embodiments of the disclosure, all other embodiments obtained by those of ordinary skill in the art without creative effort shall fall within the protection scope of the disclosure.

In the related art, misalignment parameters of tabs during winding of previously wound cells are obtained and used for controlling of a variation in embossing pressure to adjust a thickness of an electrode, thereby reducing a misalignment amount of tabs during a current winding and improving a yield of a cell. However, obtaining the misalignment parameters of tabs during winding of previously wound cells requires obtaining of a large amount of relevant data of the previously wound cells, making a process of cell winding more cumbersome. Moreover, due to the uncertainty in positions of thick portions and thin portions of a feeding electrode, solely depending on the misalignment parameters of tabs during winding of previously wound cells to adjust the embossing pressure during an embossing design may result in the thick portions of the electrode becoming thinner and the thin portions of the electrode becoming thicker, which may increase the misalignment amount of tabs, thereby resulting in a relatively low yield of the cell.

Based on above, the disclosure provides a method for cell winding and a system for cell winding to reduce the misalignment amount of tabs, thereby improving the yield of the cell.

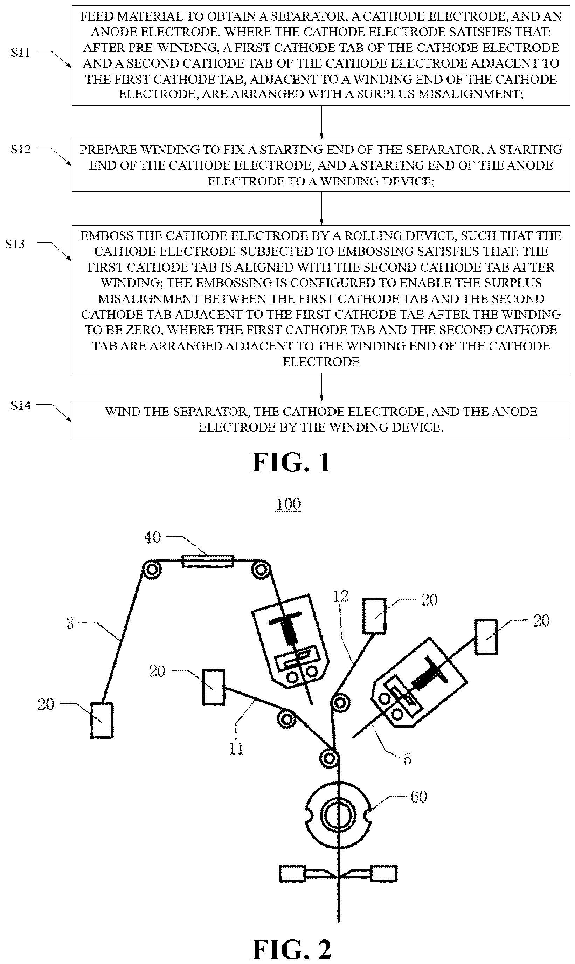

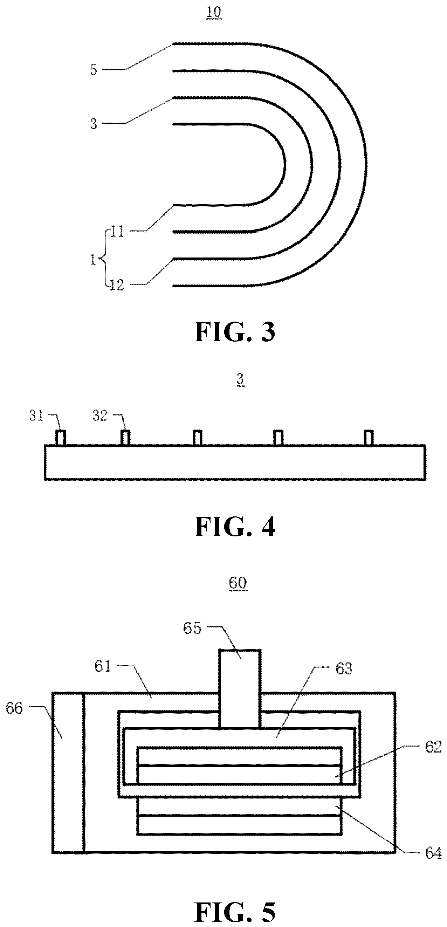

Referring to FIGS. 1, 2 and 3, FIG. 1 is a schematic flow chart of a method for cell winding according to an embodiment of the disclosure, FIG. 2 is a schematic diagram of a system for cell winding according to an embodiment of the disclosure, FIG. 3 is a schematic diagram of a wound cell according to an embodiment of the disclosure, and FIG. 4 is a schematic diagram of a cathode electrode in an unwinding state according to an embodiment of the disclosure.

A method for cell winding is provided in an embodiment of the disclosure to reduce a misalignment amount of tabs. The method for cell winding includes the following.

At S11, feeding materials is carried out to obtain a separator 1, a cathode electrode 3, and an anode electrode 5. In addition, the cathode electrode 3 obtained in the feeding materials is configured such that after pre-winding of a cell 10, a first cathode tab 31 of the of the cathode electrode 3 and a second cathode tab 32 of the cathode electrode 3 adjacent to the first cathode tab 31, adjacent to a winding end of the cathode electrode 3, are arranged with a surplus misalignment.

At S12, preparing winding is carried out to fix a starting end of the separator 1, a starting end of the cathode electrode 3, and a starting end of the anode electrode 5 to a winding device 40.

At S13, embossing is carried out to emboss the cathode electrode 3 by a rolling device 60, and the cathode electrode 3 subjected to the embossing is configured such that the first cathode tab 31 is aligned with the second cathode tab 32 after winding of the cell 10. The embossing is configured to enable the surplus misalignment between the first cathode tab 31 and the second cathode tab 32 adjacent to the first cathode tab 31 after the winding to be zero, where the first cathode tab 31 and the second cathode tab 32 are arranged adjacent to the winding end of the cathode electrode 3.

At S14, the winding is carried out to wind the separator 1, the cathode electrode 3, and the anode electrode 5 by the winding device 40 to form the cell 10.

The winding end of the cathode electrode 3 refers to a terminal end of the cathode electrode 3 where winding starts.

The pre-winding of the cell 10 is a winding of the cathode electrode 3 without embossing. A purpose of the pre-winding is to facilitate measurement and calculation of relevant parameters of the surplus misalignment between the first cathode tab 31 and the second cathode tab 32. The embossing of the rolling device 60 refers to a process where pressure is applied to the product, causing it to deform in the thickness direction. Consequently, this results in an increase in the overall thickness of the product in the thickness direction.

In the method for cell winding provided by this embodiment, firstly, during the feeding materials, the cathode electrode 3 is configured such that, after the pre-winding of the cell 10, the first cathode tab 31 of the cathode electrode 3 and the second cathode tab 32 of the cathode electrode 3 adjacent to the first cathode tab 31, adjacent to the winding end of the cathode electrode 3, are arranged to form the surplus misalignment. That is, a distance between the first cathode tab 31 and the second cathode tab 32 on the cathode electrode 3 in the unwinding state is increased in advance. Then, during the embossing, the embossing is performed on the cathode electrode 3 to thicken the cathode electrode 3. After the winding of the cell 10, since the cathode electrode 3 thickens, the first cathode tab 31 and the second cathode tab 32 which are originally in surplus misalignment can be aligned. Furthermore, by fixing rolling parameters of the rolling device 60, an overall thickness of the cathode electrode 3 can be made more uniform, so that tabs on the cathode electrode 3, other than the first cathode tab 31 and the second cathode tab 32, can be aligned with each other. Thus, according to the method for cell winding provided by this embodiment, the misalignment amount of tabs can be reduced, thereby improving a winding yield of the cell 10.

It should be understood that, the separator 1 provided in this embodiment includes a first separator 11 and a second separator 12. Before winding of an electrode of the cell 10, the first separator 11, the cathode electrode 3, the second separator 12, and the anode electrode 5 are sequentially stacked. After the winding of the electrode of the cell 10, the first separator 11, the cathode electrode 3, the second separator 12, and the anode electrode 5 are sequentially stacked from inside to outside.

Based on the described method, this embodiment provides a system for cell winding 100. The system for cell winding 100 includes a feeding device 20, a winding device 40, and a rolling device 60. The feeding device 20 is configured to provide the separator 1, the cathode electrode 3, and the anode electrode 5. The cathode electrode 3 provided by the feeding device 20 is configured such that, after the pre-winding, the first cathode tab 31 and the second cathode tab 32 adjacent to the first cathode tab 31, adjacent to the winding end of the cathode electrode 3, are arranged with the surplus misalignment. The rolling device 60 is configured to emboss the cathode electrode 3, such that the cathode electrode 3 subjected to the embossing is configured such that the first cathode tab 31 is aligned with the second cathode tab 32 after the winding of the cell 10. The winding device 40 is configured to fix the starting end of the separator 1, the starting end of the cathode electrode 3, and the starting end of the anode electrode 5, and to wind the separator 1, the cathode electrode 3, and the anode electrode 5.

In the system for cell winding 100 provided by this embodiment of the disclosure, firstly, the cathode electrode 3 provided by the feeding device 20 is designed and configured such that, after the pre-winding, the first cathode tab 31 of the cathode electrode 3 and the second cathode tab 32 of the cathode electrode 3 adjacent to the first cathode tab 31, adjacent to the winding end of the cathode electrode 3, are arranged with the surplus misalignment. That is, the distance between the first cathode tab 31 and the second cathode tab 32 on the cathode electrode 3 in the unwinding state is increased in advance. Then, the starting end of the separator 1, the starting end of the cathode electrode 3, and the starting end of the anode electrode 5 provided by the feeding device 20 are fixed by the winding device 40, and the cathode electrode 3 is embossed by the rolling device 60 to thicken the cathode electrode 3. Finally, the separator 1, the cathode electrode 3, and the anode electrode 5 are wound by the winding device 40. After the winding, since the cathode electrode 3 is thickened, the first cathode tab 31 and the second cathode tab 32 which are originally in surplus misalignment can be aligned with each other. Furthermore, by fixing the rolling parameters of the rolling device 60, an overall thickness of the cathode electrode 3 can be made more uniform, so that other taps on the cathode electrode 3, other than the first cathode tab 31 and the second cathode tab 32, can be aligned with each other. Thus, according to the system for cell winding 100 provided by this embodiment, the misalignment amount of tabs can be reduced, thereby improving the winding yield of the cell.

Referring to FIGS. 2 and 5, FIG. 5 is a schematic diagram of the rolling device according to an embodiment of the disclosure.

In this embodiment, the rolling device 60 includes a support 61, a first compression roller 62, a first driver 63, a second compression roller 64, a second driver 65, and a control valve 66. The first compression roller 62 is rotatably disposed on the support 61. The first driver 63 is configured to rotate the first compression roller 62. The second compression roller 64 is rotatably disposed on the support 61. The second compression roller 64 is parallel to the first compression roller 62. The second driver 65 is configured to drive the first compression roller 62 to move toward or away from the second compression roller 64 to adjust an embossing pressure of the rolling device 60. The control valve 66 is electrically connected to the second driver 65 and configured to control the second driver 65 to drive the first compression roller 62 to move towards or away from the second compression roller 64.

In the system for cell winding 100 provided by this embodiment, the second driver 65 is controlled to move or be fixed by adjusting the control valve 66, thereby driving the first compression roller 62 to move towards/away from the second compression roller 64 or to be relatively fixed. It is convenient to adjust or fix the embossing pressure applied by the rolling device 60 to the cathode electrode 3, such that the rolling device 60 can be applied to cathode electrodes 3 requiring different embossing depths.

More specifically, in this embodiment, the first compression roller 62 is a rubber-coating roller, the first driver 63 is a motor, the second compression roller 64 is an embossing roller, the second driver 65 is a cylinder, and the control valve 66 is a proportional valve.

In this embodiment, the first compression roller 62 satisfies that: the first compression roller 62 rotates actively; the first compression roller 62 is made of a common aluminum roller and polyurethane; and the first compression roller 62 has a hardness of 35 HS, a diameter of 29.6 mm, and a length of 213 mm.

In this embodiment, the second compression roller 64 satisfies that: the second compression roller 64 rotates passively; the second compression roller 64 is made of a high-strength aluminum alloy; the second compression roller 64 had a hardness of 500 HV, a diameter of 29.6 mm, and a length of 213 mm; each of convex points on the second compression roller 64 is circular; a radius of the convex point on the second compression roller 64 is 3.6 mm; and a distance between centers of two adjacent convex points on the second compression roller 64 is 3.5 mm; a height of the convex point on the second compression roller 64 is 0.8 mm; and a parallelism between the second compression roller 64 and the first compression roller 62 is 0.03 mm.

In this embodiment, the control valve 66 is configured to control a proportional electromagnet by outputting current in proportion to pulses, the proportional electromagnet is configured to proportionally control a position of a valve core to achieve rapid pressure rise and fall adjustment, and a control precision of the control valve 66 is limited to or equal to ±0.002 Mpa.

It can be understood that, in other implementations, the first driver 63 and the second driver 65 may be other driving structures, the first compression roller 62 and the second compression roller 64 may be other roller structures, and the control valve 66 may be other control devices, which is not limited in the disclosure.

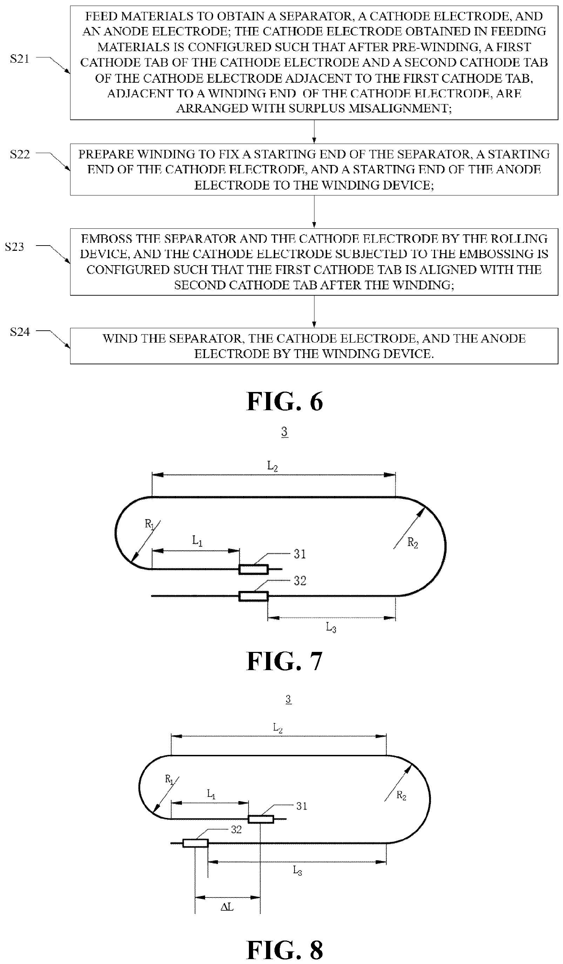

Referring to FIG. 6, FIG. 6 is a schematic flow chart of a method for cell winding according to another embodiment of the disclosure.

A method for cell winding is provided in an embodiment of the disclosure to reduce a misalignment amount of tabs. The method for cell winding includes the following.

At S21, feeding materials is carried out to obtain the separator 1, the cathode electrode 3, and the anode electrode 5. In addition, the cathode electrode 3 obtained in the feeding materials is configured such that after the pre-winding of the cell 10, the first cathode tab 31 of the cathode electrode 3 and the second cathode tab 32 of the cathode electrode 3 adjacent to the first cathode tab 31, adjacent to the winding end of the cathode electrode 3, are arranged with the surplus misalignment.

At S22, preparing winding is carried out to fix the starting end of the separator 1, the starting end of the cathode electrode 3, and the starting end of the anode electrode 5 to the winding device 40.

At S23, embossing is carried out to emboss the separator 1 and the cathode electrode 3 by the rolling device 60, and the cathode electrode 3 subjected to the embossing is configured such that the first cathode tab 31 is aligned with the second cathode tab 32 after the winding of the cell 10.

At S24, winding is carried out to wind the separator 1, the cathode electrode 3, and the anode electrode 5 by the winding device 40 to form the cell 10.

In the method for cell winding provided by this embodiment, firstly, during the feeding materials, the cathode electrode 3 is configured such that, after the pre-winding of the cell 10, the first cathode tab 31 of the cathode electrode 3 and the second cathode tab 32 of the cathode electrode 3 adjacent to the first cathode tab 31, adjacent to the winding end of the cathode electrode 3, are arranged to form the surplus misalignment. That is, the distance between the first cathode tab 31 and the second cathode tab 32 on the cathode electrode 3 in the unwinding state is increased in advance. Then, during the embossing, the embossing is performed on the separator 1 and the cathode electrode 3 to thicken the separator 1 and the cathode electrode 3. After the winding of the cell 10, the separator 1 and the cathode electrode 3 thicken, such that the first cathode tab 31 and the second cathode tab 32 which are originally in surplus misalignment can be aligned with each other. Furthermore, by fixing the rolling parameters of the rolling device 60, an overall thickness of the separator 1 and an overall thickness of the cathode electrode 3 can be made more uniform, so that the tabs on the cathode electrode 3, other than the first cathode tab 31 and the second cathode tab 32, can be aligned. Thus, according to the method for cell winding provided by this embodiment, the misalignment amount of tabs can be reduced, thereby improving the winding yield of the cell 10.

In an embodiment, the embossing is carried out to emboss the first separator 11 and the cathode electrode 3 to thicken the first separator 11 and the cathode electrode 3. In another embodiment, the embossing is carried out to emboss the second separator 12 and the cathode electrode 3 to thicken the second separator 12 and the cathode electrode 3. In another embodiment, the embossing is carried out to emboss the first separator 11, the second separator 12, and the cathode electrode 3 to thicken the first separator 11, the second separator 12, and the cathode electrode 3. It can be understood that, in some other embodiments, the embossing in the method for cell winding is carried out to emboss the separator 1, the cathode electrode 3, and the anode electrode 5 by the rolling device 60, and the cathode electrode 3 subjected to the embossing is configured such that the first cathode tab 31 is aligned with the second cathode tab 32 after the winding of the cell 10.

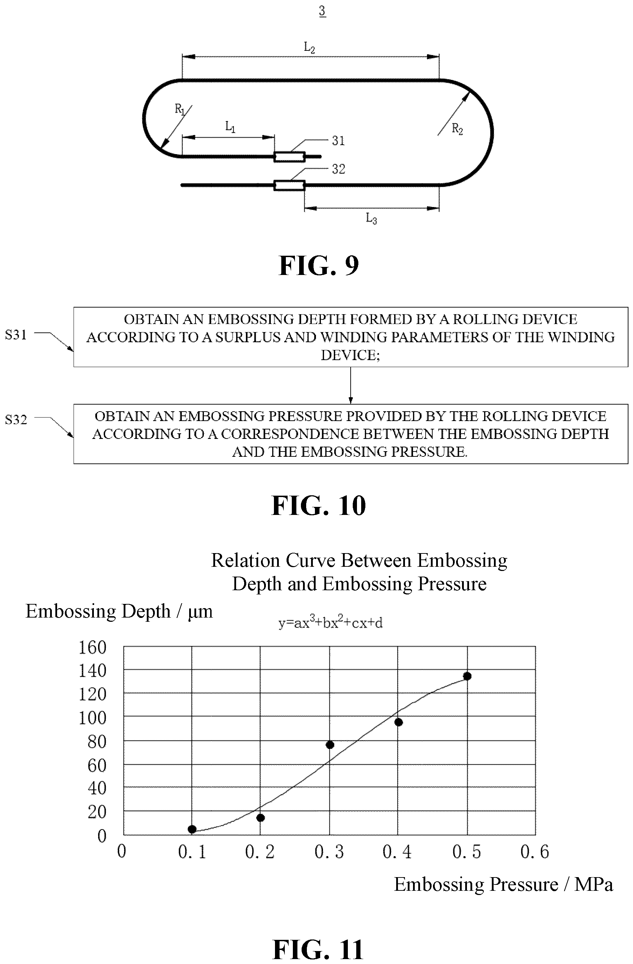

Referring to FIGS. 7, 8 and 9, FIG. 7 is a schematic diagram illustrating winding of the cathode electrode in a desired state according to an embodiment of the disclosure, FIG. 8 is a schematic diagram illustrating winding of the cathode electrode with a surplus misalignment according to an embodiment of the disclosure, and FIG. 9 is a schematic diagram illustrating winding of the cathode electrode subjected to embossing according to an embodiment of the disclosure.

Specifically, the surplus misalignment between the first cathode tab 31 and the second cathode tab 32 satisfies that: after the pre-winding of the cathode electrode 3, the first cathode tab 31 is positioned in a first circle of the cathode electrode 3 subjected to the pre-winding, and the second cathode tab 32 is positioned in a second circle of the cathode electrode 3 subjected to the pre-winding. There is a surplus ΔL between the second cathode tab 32 and the first cathode tab 31. The surplus ΔL is a distance from a geometric center of the first cathode tab 31 to a geometric center of the second cathode tab 32 along a winding trajectory of the cathode electrode 3. In the embodiments, the winding trajectory refers to a trajectory along which the cathode electrode 3 is wound.

According to the method for cell winding provided in this embodiment, the first cathode tab 31 and the second cathode tab 32 of the cathode electrode 3 are configured such that, after the pre-winding of the cathode electrode 3, the first cathode tab 31 is positioned in the first circle of the wound cathode electrode 3, and the second cathode tab 32 is positioned in the second circle of the wound cathode electrode 3. In other words, the second cathode tab 32 exceeds the first cathode tab 31, that is, there is the surplus ΔL between the second cathode tab 32 and the first cathode tab 31. As such, the thickness of the cathode electrode 3 in the unwinding state may be further increased by the rolling device 60, so that the first cathode tab 31 and the second cathode tab 32 which are originally in surplus misalignment can be aligned with each other after the winding of the cathode electrode 3, thereby allowing the surplus ΔL to be changed from non-zero to zero after the winding of the cathode electrode 3.

Referring to FIGS. 7, 8, 10, and 11, FIG. 10 is a flow chart of determining the embossing pressure according to an embodiment of the disclosure, and FIG. 11 is a graph illustrating a correspondence between the embossing depth and the embossing pressure according to an embodiment of the disclosure.

In this embodiment, in order to align the first cathode tab 31 on the cathode electrode 3 with the second cathode tab 32 on the cathode electrode 3 after the winding of the cathode electrode 3, the following is carried out.

At S31, the embossing depth y formed by the rolling device 60 is obtained according to the surplus ΔL and the winding parameters of the winding device 40.

At S32, the embossing pressure x provided by the rolling device 60 is obtained according to a correspondence between the embossing depth y and the embossing pressure x.

Specifically, at S31, the surplus ΔL is designed to be a fixed value. A specific value of the surplus ΔL illustrated in FIG. 8 may be obtained by measuring the cell 10 after the pre-winding. Since the winding device 40 is fixed, the winding parameters of the winding device 40 are also fixed values. As illustrated in FIGS. 7 and 8, the winding parameters of the winding device 40 include *L₁, L₂*, *L₃*, *R₁*, and *R₂. L₁* represents a distance from one end of the first cathode tab 31 adjacent to a first winding bend to the first winding bend, *L₃* represents a distance from a second winding bend to one end of the second cathode tab 32 adjacent to the second winding bend, *L₂* represents a distance from the first winding bend to the second winding bend, *R₁* represents a radius of the first winding bend, and *R₂* represents a radius of the second winding bend. In order to ensure that the first cathode tab 31 and the second cathode tab 32 are superposed and aligned after the winding of the cathode electrode 3, the surplus Δ*L* satisfies: Δ*L* = *π*[(*R₁* + *y* - *R₁*) + (*R₂* + *y* - *R₂*)] = 2π*y*. Therefore, according to *y* = Δ*L*/2π, the embossing depth y required to be formed by the rolling device 60 can be obtained.

Specifically, at S32, as illustrated in FIG. 11, the embossing depth is set to be represented as y, the embossing pressure is set to be represented as x, and there is a cubic function relationship between the embossing depth *y* and the embossing pressure x. The embossing depth *y* and the embossing pressure x satisfy: *y* = a*x*³ + b*x*² + c*x* + d, where a, b, c, d represent at least the relation constants corresponding to a material of the cathode electrode 3 and the parameters of the rolling device 60. A determined value of the embossing pressure *x* to be provided by the rolling device 60 can be obtained from a determined value of the embossing depth *y* and *y* = a*x*3 + b*x*2 + c*x* + d.

In this embodiment, as illustrated in FIG. 11, according to the relation constants corresponding to the material of the cathode electrode 3 and the parameters of the rolling device 60, a relationship between the embossing depth y and the embossing pressure x is obtained and satisfies: y = - 2554.7*x*³ + 2428.4*x*² - 341.08*x* + 15.045. In addition, a regression equation of the relationship between the embossing depth y and the embossing pressure x satisfies: *R²* = 97.13%, indicating a high degree of correlation. Therefore, corresponding values of the embossing depth y and the embossing pressure x have a relatively small error.

According to the method for cell winding provided by this embodiment, firstly, by calculating the surplus ΔL of the first cathode tab 31 and the second cathode tab 32, that forms the surplus misalignment during winding, and the winding parameters *L₁*, *L₂*, *L₃*, *R₁*, and *R₂* of the winding device 40, the embossing depth *y* required to be formed on the cathode electrode 3 by the rolling device 60 can be obtained. That is, an increase in the thickness of the cathode electrode 3, that is required through the embossing, can be obtained. Then, through data fitting analysis of the embossing depth y and the embossing pressure *x,* a specific correspondence between the embossing depth *y* and the embossing pressure *x* can be obtained, such that a fixed value of the embossing depth *y* can be determined, and then a fixed value of the embossing pressure *x* required to be provided corresponding to the embossing depth y can be determined. By adjusting the fixed value of the embossing pressure x provided by the rolling device 60, the thickness of the cathode electrode 3 can be increased under the action of the rolling device 60, and a winding thickness can be uniform, where the winding thickness is the sum of a thickness of the cathode electrode 3 at a fixed position and the embossing depth *y* at the fixed position. Thus, the thickness of the cathode electrode 3 can be increased, so that the first cathode tab 31 can be aligned with the second cathode tab 32 after the winding of the cathode electrode 3. Furthermore, the fixed embossing pressure *x* provided by the rolling device 60 can make the winding thickness of the cathode electrode 3 more uniform, so that the tabs on the cathode electrode 3, other than the first cathode tab 31 and the second cathode tab 32, can also be aligned, which is beneficial to reducing the misalignment amount of the tabs on the cathode electrode 3, thereby improving the winding yield of the cell 10.

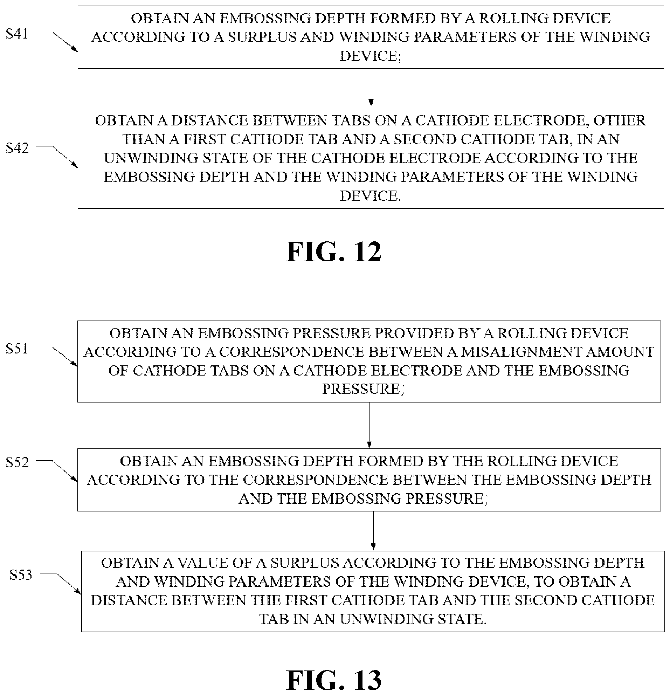

Referring to FIG. 12, FIG. 12 is a schematic flow chart of determining a distance between the tabs on the cathode electrode, other than the first cathode tab and the second cathode tab, according to an embodiment of the disclosure.

In this embodiment, in order to align the tabs of the cathode electrode 3, other than the first cathode tab 31 and the second cathode tab 32 after the winding of the cathode electrode 3, the following is carried out.

At S41, the embossing depth y formed by the rolling device 60 is obtained according to the surplus Δ*L* and the winding parameters of the winding device 40.

At S42, the distance between the tabs on the cathode electrode 3, other than the first cathode tab 31 and the second cathode tab 32, in an unwinding state of the cathode electrode 3 is obtained according to the embossing depth y and the winding parameters of the winding device 40.

Specifically, specific operations at S41 are the same as operations at S31, and details are not described herein again.

Specifically, at S42, first, winding parameters of the first separator 11, the cathode electrode 3, the second separator 12, and the anode electrode 5 may be obtained according to a structure and a winding form of the second circle of the cell 10. Then, the distance between the tabs of the cathode electrode 3, other than the first cathode tab 31 and the second cathode tab 32, in the unwinding state can be obtained according to the embossment depth *y* and the winding parameters *L₁*, *L₂*, *L₃*, *R₁*, and *R₂* of the winding device 40.

According to the method for cell winding provided by the embodiments of the disclosure, firstly, by calculating the surplus Δ*L* of the first cathode tab 31 and the second cathode tab 32, that forms the surplus misalignment during winding, and the winding parameters *L₁*, *L₂*, *L₃*, *R₁*, and *R₂* of the winding device 40, the embossing depth y required to be formed on the cathode electrode 3 by the rolling device 60 can be obtained. That is, an increase in the thickness of the cathode electrode 3, that is required through the embossing, can be obtained. Then, by calculating the embossing depth y and the winding parameters of the winding device 40 for winding of the first separator 11, the cathode electrode 3, the second separator 12, and the anode electrode 5, the distance between the tabs on the cathode electrode 3, other than the first cathode tab 31 and the second cathode tab 32, in the unwinding state of the cathode electrode 3 can be obtained, so that the cathode electrode 3 can be configured such that, after the winding, the tabs on the cathode electrode 3, other than the first cathode tab 31 and the second cathode tab 32, can be aligned. Thus, by designing the distance between the tabs on the cathode electrode 3, other than the first cathode tab 31 and the second cathode tab 32, in the unwinding state of the cathode electrode 3, the tabs on the cathode electrode 3 can be aligned after the winding of the cathode electrode 3, thereby improving the winding yield of the cell 10.

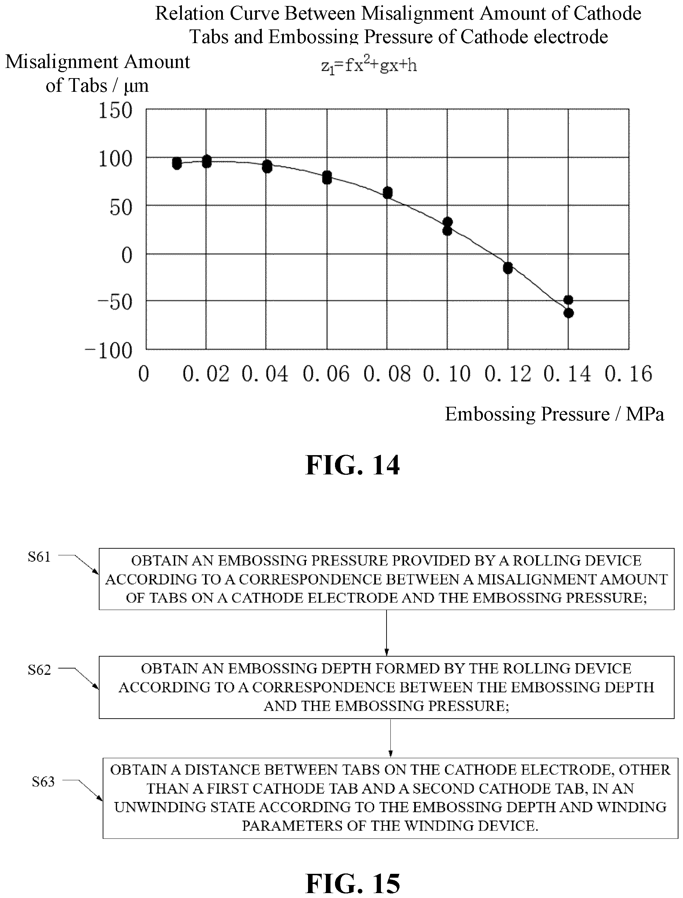

Referring to FIGS. 13 and 14, FIG. 13 is a schematic flow chart of determining the distance between the first cathode tab and the second cathode tab on the cathode electrode according to another embodiment of the disclosure, and FIG. 14 is a graph illustrating the correspondence between the misalignment amount of cathode tabs and the embossing pressure according to an embodiment of the disclosure.

In this embodiment, in order to align the first cathode tab 31 on the cathode electrode 3 with the second cathode tab 32 on the cathode electrode 3 after the winding of the cathode electrode 3, the following is carried out.

At S51, the embossing pressure *x* provided by the rolling device 60 is obtained according to a correspondence between the misalignment amount *z₁* of the cathode tabs on the cathode electrode 3 and the embossing pressure *x.*

At S52, the embossing depth *y* formed by the rolling device 60 is obtained according to the correspondence between the embossing depth *y* and the embossing pressure *x.*

At S53, a value of the surplus Δ*L* is obtained according to the embossing depth *y* and the winding parameters *L₁*, *L₂*, *L₃*, *R₁*, and *R₂* of the winding device 40, to obtain the distance between the first cathode tab 31 and the second cathode tab 32 in the unwinding state of the cathode electrode.

Specifically, at S51, as illustrated in FIG. 14, the misalignment amount of the tabs on the cathode electrode 3 is set to be represented as *z₁*, the embossing pressure is set to be represented as *x,* and there is a quadratic function relationship between the misalignment amount *z₁* of the tabs on the cathode electrode 3 and the embossing pressure *x.* The misalignment amount *z₁* of the tabs on the cathode electrode 3 and the embossing pressure *x* satisfy: *z₁* = f*x* ²+ g*x* + h, where f, g, and h represent at least relation constants corresponding to the material of the cathode electrode 3 and the forgoing parameters. According to *z₁* = f*x* ²+ g*x* + h and the minimum value (i.e., zero) of the misalignment amount *z₁* of the tabs on the cathode electrode 3, a determined value of the embossing pressure x, that is required to be provided by the rolling device 60, can be obtained.

It is noted that, the misalignment amount is obtained by measuring a maximum distance between tabs on a previous cathode electrode along a winding trajectory after winding of the previous cathode electrode, where the previous cathode electrode is the same as the cathode electrode 3 except that there is no surplus misalignment provided for the previous cathode electrode.

In this embodiment, as illustrated in FIG. 14, according to the relation constants corresponding to the material of the cathode electrode 3 and the forgoing parameters, a relationship between the misalignment amount *z₁* of the tabs on the cathode electrode 3 and the embossing pressure x is obtained and satisfies: *z₁* = -11526 *x*² + 539.27*x* + 89.426. In addition, a regression equation of the relationship satisfies: *R²* = 99.45%, indicating a high degree of correlation. Therefore, the corresponding values of the misalignment amount *z₁* of the tabs on the cathode electrode 3 and the embossing pressure x have a relatively small error.

Specifically, at S52, as illustrated in FIG. 11, the embossing depth is set to be represented as *y,* the embossing pressure is set to be represented as *x,* and there is a cubic function relationship between the embossing depth *y* and the embossing pressure *x.* The embossing depth *y* and the embossing pressure *x* satisfy: *y* = a*x*³ + b*x*² + c*x* + d, where a, b, c, d represent at least the relation constants corresponding to the material of the cathode electrode 3 and the parameters of the rolling device 60. The determined value of the embossing pressure *x* to be provided by the rolling device 60 can be obtained from a determined value of the embossing depth *y* and *y* = a*x*3 + b*x*2 + c*x* + d.

Specifically, at S53, since the embossment depth *y* is a fixed value and the winding device 40 is fixed, the winding parameters *L₁*, *L₂*, *L₃*, *R₁*, and *R₂* of the winding device 40 are also fixed values. As illustrated in FIG. 7 and 8, the winding parameters of the winding device 40 include *L₁*, *L₂*, *L₃*, *R₁*, and *R₂. L₁* represents a distance from one end of the first cathode tab 31 adjacent to a first winding bend to the first winding bend, *L₃* represents a distance from a second winding bend to one end of the second cathode tab 32 adjacent to the second winding bend, *L₂* represents a distance from the first winding bend to the second winding bend, *R₁* represents a radius of the first winding bend, and *R₂* represents a radius of the second winding bend. In order to ensure that the first cathode tab 31 and the second cathode tab 32 are superposed and aligned after the winding of the cathode electrode 3, the surplus Δ*L* satisfies: Δ*L* = *π*[(*R₁* + *y* - *R₁*) + (*R₂* + *y* - *R₂*)] = 2π*y*. Thus, the distance between the first cathode tab 31 and the second cathode tab 32 in the unwinding state of the cathode electrode can be obtained.

According to the method for cell winding provided in the embodiments of the disclosure, first, through data fitting analysis of the misalignment amount *z₁* of the tabs on the cathode electrode 3 and the embossing pressure x, a specific correspondence between the misalignment amount *z₁* of the tabs on the cathode electrode 3 and the embossing pressure *x* can be obtained, such that the embossing pressure *x* corresponding to a relatively small misalignment amount *z₁* of the tabs on the cathode electrode 3 that needs to be provided by the rolling device 60 can be obtained. Then, the embossing depth *y* required to be formed by the rolling device 60 is obtained according to the correspondence between the embossing depth *y* and the embossing pressure *x.* Finally, a fixed value of the surplus Δ*L* between the first cathode tab 31 and the second cathode tab 32 can be obtained by calculating the embossing depth *y* and the winding parameters *L₁*, *L₂*, *L₃*, *R₁*, and *R₂* of the winding device 40, such that a fixed distance between the first cathode tab 31 and the second cathode tab 32 in the unwinding state of the cathode electrode 3 can be obtained. Thus, the increase in the thickness of the cathode electrode 3 may compensate for the surplus of the misalignment between the first cathode tab 31 and the second cathode tab 32, so that the first cathode tab 31 can be aligned with the second cathode tab 32 after the winding of the cathode electrode 3.

Referring to FIG. 15, FIG. 15 is a schematic flow chart of determining the distance between tabs on the cathode electrode, other than the first cathode tab and the second cathode tab, according to another embodiment of the disclosure.

In this embodiment, in order to align the taps on the cathode electrode 3, other than the first cathode tab 31 and the second cathode tab 32, after the winding of the cathode electrode 3, the following is carried out.

At S61, the embossing pressure x provided by the rolling device 60 is obtained according to the correspondence between the misalignment amount *z₁* of the tabs on the cathode electrode 3 and the embossing pressure *x.*

At S62, the embossing depth y formed by the rolling device 60 is obtained according to the correspondence between the embossing depth *y* and the embossing pressure *x.*

At S63, the distance between the tabs on the cathode electrode 3, other than the first cathode tab 31 and the second cathode tab 32, in the unwinding state of the cathode electrode is obtained according to the embossing depth *y* and the winding parameters *L₁*, *L₂*, *L₃*, *R₁*, and *R₂* of the winding device 40.

Specifically, specific operations at S61 are the same as operations at S51, and details are not described herein again.

Specifically, specific operations at S62 are the same as operations at S52, and details are not described herein again.

Specifically, at S63, first, the winding parameters of the first separator 11, the cathode electrode 3, the second separator 12, and the anode electrode 5 may be obtained according to a structure and a winding form of the second circle of the cell 10. The distance between the tabs of the cathode electrode 3, other than the first cathode tab 31 and the second cathode tab 32 in the unwinding state can then be obtained according to the embossment depth y and the winding parameters *L₁*, *L₂*, *L₃*, *R₁*, and *R₂* of the winding device 40.

According to the method for cell winding provided in the embodiments of the disclosure, firstly, the embossing pressure *x,* that is required to be provided by the rolling device 60, can be obtained according to the correspondence between the misalignment amount *z₁* of the tabs on the cathode electrode 3 and the embossing pressure *x,* such that the embossing pressure *x,* required to be provided by the rolling device 60, corresponding to a relatively small misalignment amount *z₁* of the tabs on the cathode electrode 3 can be obtained. Then, the fixed value of the embossing depth *y* of the cathode electrode 3 can be obtained according to the correspondence between the embossing depth *y* and the embossing pressure *x,* thereby obtaining a value of the winding thickness of the cathode electrode 3. Finally, by calculating the embossing depth *y* and the winding parameters *L₁*, *L₂*, *L₃*, *R₁*, and *R₂* of the winding device 40, the distance between the tabs of the cathode electrode 3, other than the first cathode tab 31 and the second cathode tab 32, in the unwinding state of the cathode electrode 3 can be obtained, so that the cathode electrode 3 can be configured such that after the winding, the tabs of the cathode electrode 3, other than the first cathode tab 31 and the second cathode tab 32, can be are aligned. Thus, by designing the distance between the tabs on the cathode electrode 3, other than the first cathode tab 31 and the second cathode tab 32, in the unwinding state of the cathode electrode 3, the tabs on the cathode electrode 3 can be aligned after the winding of the cathode electrode 3, thereby improving the winding yield of the cell 10.

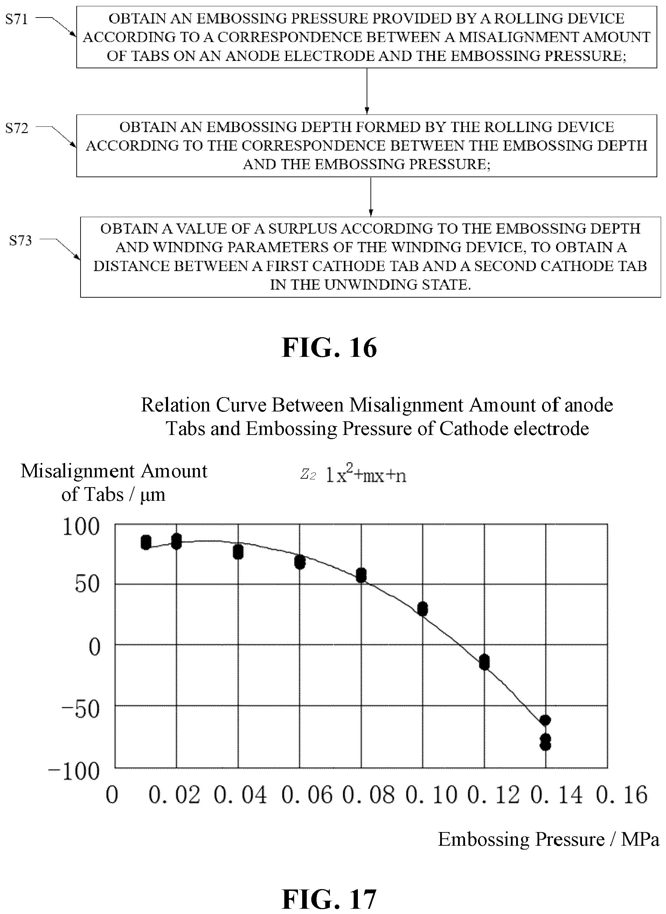

Referring to FIGS. 16 and 17, FIG. 16 is a schematic flow chart of determining the distance between the first cathode tab and the second cathode tab on the cathode electrode according to another embodiment of the disclosure, and FIG. 17 is a graph illustrating the correspondence between the misalignment amount of anode tabs and the embossing pressure according to an embodiment of the disclosure.

In this embodiment, in order to align the first cathode tab 31 on the cathode electrode 3 with the second cathode tab 32 on the cathode electrode 3 after the winding of the cathode electrode 3, the following is carried out.

At S71, the embossing pressure *x* provided by the rolling device 60 is obtained according to a correspondence between a misalignment amount *z*₂ of the tabs on the anode electrode 5 and the embossing pressure *x.*

At S72, the embossing depth *y* formed by the rolling device 60 is obtained according to the correspondence between the embossing depth *y* and the embossing pressure *x.*

At S73, the value of the surplus Δ*L* is obtained according to the embossing depth y and the winding parameters of the winding device 40, to obtain the distance between the first cathode tab 31 and the second cathode tab 32 in the unwinding state of the cathode electrode 3.

It is noted that, the misalignment amount is obtained by measuring a maximum distance between tabs on a previous anode electrode along a winding trajectory after winding of the previous anode electrode, wherein the previous anode electrode is the same as the anode electrode 5 except that there is no surplus misalignment provided for the previous anode electrode 5.

Specifically, at S71, as illustrated in FIG. 17, the misalignment amount of the tabs on the anode electrode 5 is set to be represented as *z*₂, the embossing pressure is set to be represented as *x,* there is a quadratic function relationship between the misalignment amount *z*₂ of the tabs on the anode electrode and the embossing pressure *x,* and the misalignment amount *z*₂ of the tabs on the anode electrode 5 and the embossing pressure *x* satisfy: *z*₂ = l*x*² + m*x* + n, where 1, m, and n represent at least relation constants corresponding to a material of the anode electrode 3 and the forgoing parameters. According to *z*₂ = l*x*² + m*x* + n and the minimum value (i.e., zero) of the misalignment amount *z₂* of the tabs on the anode electrode 5, the determined value of the embossing pressure *x*, that is required to be provided by the rolling device 60, can be obtained.

In this embodiment, as illustrated in FIG. 17, according to the relation constants corresponding to the material of the anode electrode 5 and the forgoing parameters, a relationship between the misalignment amount *z₂* of the tabs on the anode electrode 5 and the embossing pressure x is obtained and satisfies: *z₂* = -12807*x*² + 783.37*x* + 73.748. In addition, a regression equation of the relationship between the misalignment amount *z₂* of the tabs on the anode electrode 5 and the embossing pressure x satisfies: *R²* = 98.57%, indicating a high degree of correlation. Therefore, the corresponding values of the misalignment amount *z₂* of the tabs on the anode electrode 5 and the embossing pressure *x* have a relatively small error.

Specifically, specific operations at S72 are the same as operations at S52, and details are not described herein again.

Specifically, specific operations at S73 are the same as operations at S53, and details are not described herein again.

According to the method for cell winding provided in the embodiments of the disclosure, first, through data fitting analysis of the misalignment amount *z₂* of the tabs on the anode electrode 5 and the embossing pressure *x*, a specific correspondence between the misalignment amount *z₂* of the tabs on the anode electrode 5 and the embossing pressure *x* can be obtained, such that the embossing pressure *x* corresponding to a relatively small misalignment amount *z₂* of the tabs on the anode electrode 5, that needs to be provided by the rolling device 60, can be obtained. Then, according to the correspondence between the embossing depth *y* and the embossing pressure *x*, the embossing depth y required to be formed by the rolling device 60 is obtained. Finally, the fixed value of the surplus Δ*L* between the first cathode tab 31 and the second cathode tab 32 can be obtained by calculating the embossing depth *y* and the winding parameters *L₁*, *L₂*, *L₃*, *R₁*, and *R₂* of the winding device 40, such that the fixed distance between the first cathode tab 31 and the second cathode tab 32 in the unwinding state of the cathode electrode 3 can be obtained. Thus, the increase in the thickness of the cathode electrode 3 may compensate for the surplus of the misalignment between the first cathode tab 31 and the second cathode tab 32, so that the first cathode tab 31 can be aligned with the second cathode tab 32 after the winding of the cathode electrode 3.

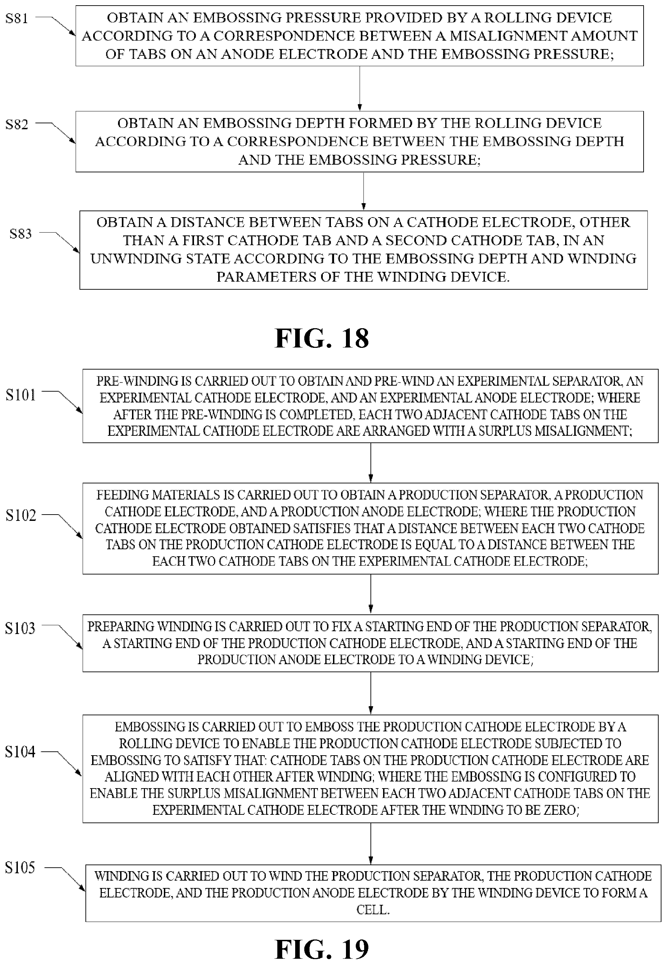

Referring to FIG. 18, FIG. 18 is a schematic flow chart of determining the distance between tabs on the cathode electrode, other than the first cathode tab and the second cathode tab, according to yet another embodiment of the disclosure.

In this embodiment, in order to align the taps on the cathode electrode 3, other than the first cathode tab 31 and the second cathode tab 32, the following is carried out.

At S81, the embossing pressure *x* provided by the rolling device 60 is obtained according to a correspondence between the misalignment amount z₂ of the tabs on the anode electrode 5 and the embossing pressure *x.*

At S82, the embossing depth *y* formed by the rolling device 60 is obtained according to the correspondence between the embossing depth *y* and the embossing pressure *x.*

At S83, the distance between the tabs on the cathode electrode 3, other than the first cathode tab 31 and the second cathode tab 32, in the unwinding state of the cathode electrode 3 is obtained according to the embossing depth and the winding parameters of the winding device 40.

Specifically, specific operations at S81 are the same as operations at S71, and details are not described herein again.

Specifically, specific operations at S82 are the same as operations at S72, and details are not described herein again.

Specifically, specific operations at S83 are the same as operations at S63, and details are not described herein again.

According to the method for cell winding provided in the embodiments of the disclosure, firstly, the embossing pressure *x,* that is required to be provided by the rolling device 60, can be obtained according to the correspondence between the misalignment amount *z₂* of the tabs on the anode electrode 5 and the embossing pressure *x*, such that the embossing pressure *x,* required to be provided by the rolling device 60, corresponding to a relatively small misalignment amount *z₂* of the tabs on the anode electrode 5 can be obtained. Then, the fixed value of the embossing depth *y* of the cathode electrode 3 can be obtained according to the correspondence between the embossing depth *y* and the embossing pressure *x*, thereby obtaining the value of the winding thickness of the cathode electrode 3. Finally, by calculating the embossing depth *y* and the winding parameters *L₁*, *L₂*, *L₃*, *R₁*, and *R₂* of the winding device 40, the distance between the tabs of the cathode electrode 3, other than the first cathode tab 31 and the second cathode tab 32, in the unwinding state of the cathode electrode 3 can be obtained, so that the cathode electrode 3 can be configured such that after the winding, the tabs of the cathode electrode 3, other than the first cathode tab 31 and the second cathode tab 32, can be are aligned. Thus, by designing the distance between the tabs on the cathode electrode 3, other than the first cathode tab 31 and the second cathode tab 32, in the unwinding state of the cathode electrode 3, the tabs on the cathode electrode 3 can be aligned after the winding of the cathode electrode 3, thereby improving the winding yield of the cell 10.

Referring to FIG. 19, FIG. 19 is a schematic flow chart of a method for cell winding according to another embodiment of the disclosure.

In some embodiments, a method for winding the cell 10 is further provided in the disclosure to avoid the alignment of tabs. The method for winding the cell 10 includes the following.

At S101, pre-winding is carried out to obtain and pre-wind an experimental separator, an experimental cathode electrode, and an experimental anode electrode; where after the pre-winding is completed, each two adjacent cathode tabs on the experimental cathode electrode are arranged with a surplus misalignment.

At S102, feeding materials is carried out to obtain a production separator 1, a production cathode electrode 3, and a production anode electrode 5; where the production cathode electrode 3 obtained satisfies that a distance between each two cathode tabs on the production cathode electrode 3 is equal to a distance between the each two cathode tabs on the experimental cathode electrode.

At S103, preparing winding is carried out to fix a starting end of the production separator 1, a starting end of the production cathode electrode 3, and a starting end of the production anode electrode 5 to a winding device.

At S104, embossing is carried out to emboss the production cathode electrode 1 by a rolling device 60 to enable the production cathode electrode 3 subjected to embossing to satisfy that: cathode tabs on the production cathode electrode 3 are aligned with each other after winding; where the embossing is configured to enable the surplus misalignment between each two adjacent cathode tabs on the experimental cathode electrode after the winding to be zero.

At S105, winding is carried out to wind the production separator 1, the production cathode electrode 3, and the production anode electrode 5 by the winding device to form a cell 10.

The experimental separator, the experimental cathode electrode, and the experimental anode electrode obtained in the pre-winding are different from the production separator, the production cathode electrode, and the production anode electrode obtained in the feeding materials. The winding of the experimental cathode electrode in the pre-winding is performed before embossing treatment, aiming to facilitate the measurement and calculation of relevant parameters of the surplus misalignment between different cathode tabs on the experimental cathode electrode. The feeding materials involves obtaining the production separator 1, the production cathode electrode 3, and the production anode electrode 5 that are used in actual mass production.

In the method for cell winding provided by this embodiment, firstly, during the pre-winding, the pre-winding is carried out to obtain the experimental separator, the experimental cathode electrode, and the experimental anode electrode; where after the pre-winding is completed, each two adjacent cathode tabs on the experimental cathode electrode are arranged with the surplus misalignment. Then, during the feeding materials, the production cathode electrode 3 is configured such that, after the winding of the cell 10, a surplus misalignment between cathode tabs on the production cathode electrode 3 is the same as the surplus misalignment between each two adjacent cathode tabs on the experimental cathode electrode formed during the pre-winding. That is, a distance between each two adjacent cathode tabs on the production cathode electrode 3, obtained in the feeding materials, in an unwinding state is preset to be the same as a distance between each two adjacent cathode tabs on the experimental cathode electrode, obtained in the pre-winding, in the unwinding state. Then, during the embossing, the embossing is performed on the production cathode electrode 3 obtained in the feeding materials to thicken the production cathode electrode 3. After the winding of the cell 10, since the production cathode electrode 3 thickens, the cathode tabs on the production cathode electrode 3, which are not thickened originally and thus in surplus misalignment with each other, can be aligned after the actual winding. Furthermore, by fixing rolling parameters of the rolling device 60, an overall thickness of the production cathode electrode 3 can be made more uniform, so that each pair of tabs on the production cathode electrode 3 can be aligned with each other. Thus, according to the method for cell winding provided by this embodiment, the misalignment amount of tabs of the cell 10 can be reduced, thereby improving a winding yield of the cell 10.

Based on the above method, a system 100 for cell winding is provided in the disclosure. The system 100 includes a pre-winding device (not illustrated), a feeding device 20, a rolling device 40, and a winding device 60. The pre-winding device configured to obtain the experimental separator, the experimental cathode electrode, and the experimental anode electrode and to complete the pre-winding. After the pre-winding is completed, each two adjacent cathode tabs on the experimental cathode electrode are arranged with a surplus misalignment. The feeding device 20 is configured to provide the production separator 1, the production cathode electrode 3, and the production anode electrode 5. The production cathode electrode 3 provided by the feeding device 20 satisfies that: a distance between each two adjacent cathode tabs on the production cathode electrode 3 is equal to a distance between the each two adjacent cathode tabs on the experimental cathode electrode. The rolling device 60 is configured to emboss the production cathode electrode 3 to enable the production cathode electrode 3 subjected to embossing to satisfy that: cathode tabs on the production cathode electrode3 are aligned with each other after winding. The winding device 40 is configured to fix a starting end of the production separator 1, a starting end of the production cathode electrode 3, and a starting end of the production anode electrode 5 and to wind the production separator 1, the production cathode electrode 3, and the production anode electrode 5.

The system 100 for cell winding provided in this embodiment is configured to operate as follows. Firstly, the pre-winding is carried out to obtain the experimental separator, the experimental cathode electrode, and the experimental anode electrode; where after the pre-winding is completed, each two adjacent cathode tabs on the experimental cathode electrode are arranged with the surplus misalignment. Then, by setting the production cathode electrode 3 provided by the feeding device 20, the production cathode electrode 3 is configured such that, after the pre-winding, a surplus misalignment between each two adjacent cathode tabs on the production cathode electrode 3 is the same as the surplus misalignment between each two adjacent cathode tabs on the experimental cathode electrode. In other words, a distance between each two adjacent cathode tabs on the production cathode electrode 3 in the unwinding state is preset to be increased. Then, the starting end of the production separator 1, the starting end of the production cathode electrode 3, and the starting end of the production anode electrode 5 are fixed by the winding device 40, and the production separator 1, the production cathode electrode 3, and the production anode electrode 5 are embossed by the rolling device 60 to thicken the production separator 1. Finally, the production separator 1, the production cathode electrode 3, and the production anode electrode 5 are wound by the winding device 40. After the winding, since the production cathode electrode 3 thickens, the cathode tabs on the production cathode electrode 3, which are not thickened originally and thus in surplus misalignment with each other, can be aligned after the actual winding. Furthermore, by fixing rolling parameters of the rolling device 60, an overall thickness of the production cathode electrode 3 can be made more uniform, so that each pair of tabs on the production cathode electrode 3 can be aligned with each other. Thus, according to the system 100 for cell winding provided by this embodiment, the misalignment amount of tabs of the cell 10 can be reduced, thereby improving a winding yield of the cell 10.

In some embodiments, during the pre-winding, the surplus misalignment satisfies that: after the pre-winding, in the each two adjacent cathode tabs on the experimental cathode electrode, one cathode tab is positioned in a first circle, and another cathode tab is positioned in a second circle; there is a surplus between the one cathode tab positioned in the first circle and the another cathode tab positioned in the second circle, where the surplus is a distance from a geometric center of the one cathode tab positioned in the first circle to a geometric center of the another cathode tab positioned in the second circle along a winding trajectory.

In the method for cell winding provided in this embodiment, each two adjacent cathode tabs on the experimental cathode electrode are configured such that: after the pre-winding of the experimental cathode electrode, in the each two adjacent cathode tabs on the experimental cathode electrode, one cathode tab is positioned in the first circle of the wound experimental cathode electrode, and another cathode tab is positioned in the second circle of the wound experimental cathode electrode, in other words, the another cathode tab exceeds the one cathode tab, that is, there is a surplus between the another cathode tab and the one cathode tab. As such, the thickness of the experimental cathode electrode in the unwinding state may be further increased by the rolling device 60, so that the one cathode tab and the another cathode tab on the experimental cathode electrode, which are originally in surplus misalignment after winding, can be aligned with each other after the winding of the experimental cathode electrode 3, thereby allowing the surplus to be changed from non-zero to zero after the winding of the experimental cathode electrode 3. At the same time, the actual production cathode electrode is designed to be the same as the experimental cathode electrode, and the rolling parameters of the rolling device for the actual production cathode electrode 3 are the same as that for the experimental cathode electrode. This ensures that the cathode tabs on the production cathode electrode, which are originally not thickened and thus have surplus misalignment, align with each other after actual winding.

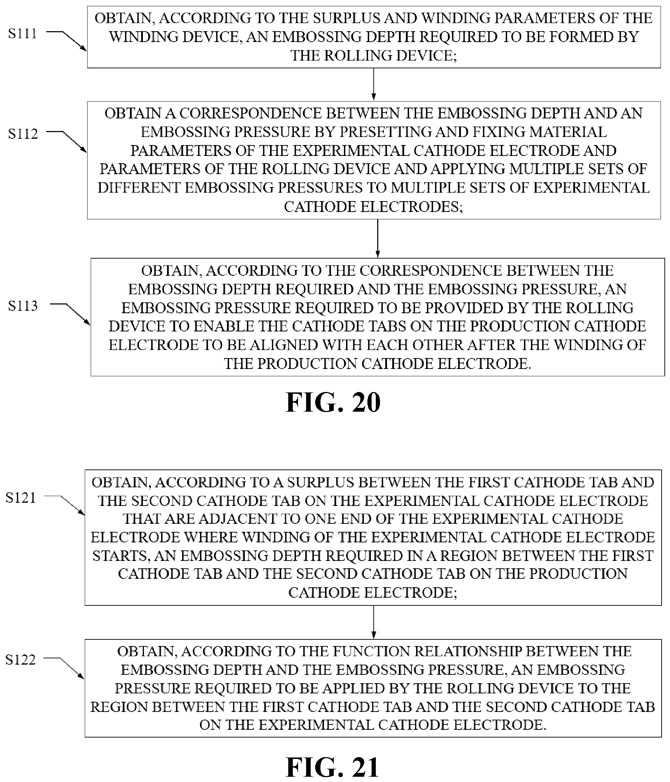

Referring to FIG. 20, FIG. 20 is a schematic flow chart of a method for cell winding according to another embodiment of the disclosure.

In one embodiment, in order to make the cathode tabs on the production cathode electrode 3 to be aligned with each other after winding, the following operations are carried out.

At S111, an embossing depth required to be formed by the rolling device 60 is obtained according to the surplus Δ*L* and winding parameters of the winding device 40.

At S112, a correspondence between the embossing depth and an embossing pressure is obtained by presetting and fixing material parameters of the experimental cathode electrode and parameters of the rolling device and applying multiple sets of different embossing pressures to multiple sets of experimental cathode electrodes.

At S113, an embossing pressure required to be provided by the rolling device is obtained according to the correspondence between the embossing depth required and the embossing pressure, to enable the cathode tabs on the production cathode electrode to be aligned with each other after the winding of the production cathode electrode.

During the winding of the cell 10, the winding parameters *L₁*, *L₂*, *L₃*, *R₁*, and *R₂* vary in different circles. *L₁* represents a distance from one end of the first cathode tab 31 adjacent to a first winding bend to the first winding bend, *L₃* represents a distance from a second winding bend to one end of the second cathode tab 32 adjacent to the second winding bend, *L₂* represents a distance from the first winding bend to the second winding bend, *R₁* represents a radius of the first winding bend, and *R₂* represents a radius of the second winding bend. Due to a smaller radius of an inner circle compared to an outer circle, it is necessary to design the surplus Δ*L* between adjacent tabs to have different values in different circles of the production cathode electrode 3. This ensures that the embossing depth of the rolling device 60 on the production cathode electrode 3 remains constant, thereby maintaining a fixed embossing pressure of the rolling device 60 on the cathode electrode 3.

Specifically, in order to ensure that the first cathode tab 31 and the second cathode tab 32 are superposed and aligned after the winding of the cathode electrode 3, the surplus Δ*L* satisfies: Δ*L* = *π*[(*R₁* + *y* - *R₁*) + (*R₂* + *y* - *R₂*)] = 2π*y*. Therefore, according to *y* = Δ*L*/2π, the embossing depth y required to be formed by the rolling device 60 can be obtained.

Specifically, the embossing depth is set to be represented as *y,* the embossing pressure is set to be represented as *x,* and there is a cubic function relationship between the embossing depth *y* and the embossing pressure *x.* The embossing depth *y* and the embossing pressure *x* satisfy: *y* = a*x*³ + b*x*² + c*x* + d, where a, b, c, d represent at least the relation constants corresponding to a material of the experimental cathode electrode or a material of the production cathode electrode 3 and the parameters of the rolling device 60.

More specifically, according to the relation constants corresponding to the material of the experimental cathode electrode or the material of the production cathode electrode 3 and the parameters of the rolling device 60, a relationship between the embossing depth *y* and the embossing pressure *x* is obtained and satisfies: *y* = -2554.7*x*³ + 2428.4*x*² - 341.08*x* + 15.045. In addition, a regression equation of the relationship between the embossing depth *y* and the embossing pressure x satisfies: *R²* = 97.13%, indicating a high degree of correlation. Therefore, corresponding values of the embossing depth y and the embossing pressure *x* have a relatively small error.

According to the method for cell winding provided by this embodiment, firstly, by calculating the surplus Δ*L* of the cathode tabs on the production cathode electrode 3, that forms the surplus misalignment during winding, and the winding parameters *L₁*, *L₂*, *L₃*, *R₁*, and *R₂* of the winding device 40, the embossing depth *y* required to be formed on the production cathode electrode 3 by the rolling device 60 can be obtained. That is, an increase in the thickness of the production cathode electrode 3, that is required through the embossing, can be obtained. Then, a specific correspondence between the embossing depth y and an embossing pressure *x* can be obtained by presetting and fixing material parameters of the experimental cathode electrode and parameters of the rolling device, applying multiple sets of different embossing pressures to multiple sets of experimental cathode electrodes, and performing data fitting analysis on the embossing depth *y* and the embossing pressure *x,* such that a fixed value of the embossing depth *y* can be determined, and then a fixed value of the embossing pressure *x* required to be provided corresponding to the embossing depth *y* can be determined. By adjusting the fixed value of the embossing pressure *x* provided by the rolling device 60, the thickness of the production cathode electrode 3 can be increased under the action of the rolling device 60, and a winding thickness can be uniform, where the winding thickness is the sum of a thickness of the production cathode electrode 3 at a fixed position and the embossing depth *y* at the fixed position. Thus, the thickness of the production cathode electrode 3 can

be increased, so that the cathode tabs on the production cathode electrode 3 can be aligned with each other after the winding of the production cathode electrode 3. Furthermore, the fixed embossing pressure *x* provided by the rolling device 60 can make the winding thickness of the production cathode electrode 3 more uniform, so that other tabs on the production cathode electrode 3 can also be aligned, which is beneficial to reducing the misalignment amount of the tabs on the production cathode electrode 3, thereby improving the winding yield of the cell 10.

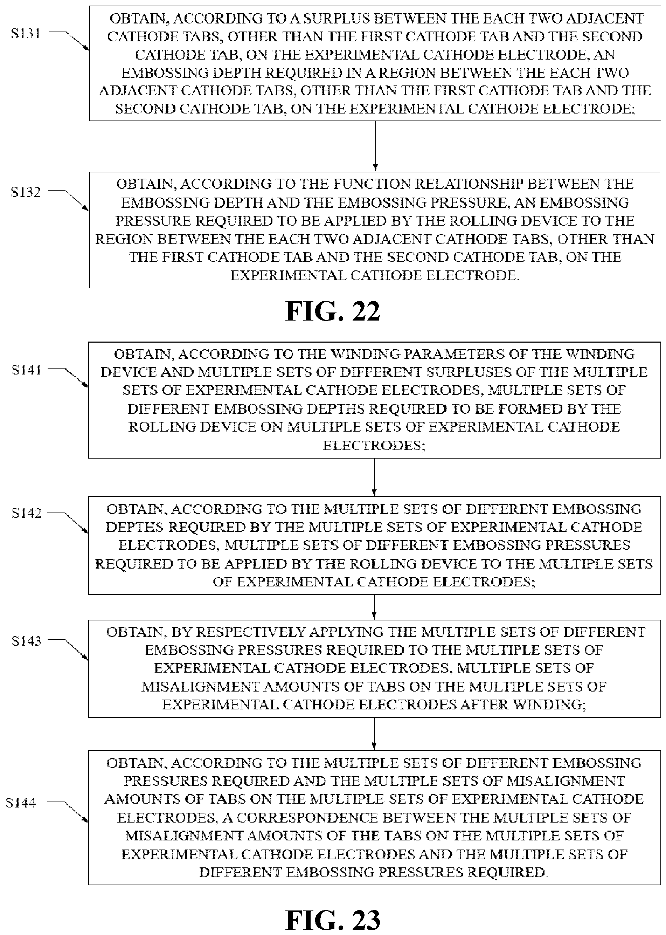

Referring to FIG. 21 and FIG. 22, FIG. 21 is a schematic flow chart of aligning a first cathode tab and a second cathode tab on a cathode electrode with each other according to another embodiment of the disclosure, and FIG. 22 is a schematic flow chart of aligning cathode tabs, other than the first cathode tab and the second cathode tab, on the cathode electrode with each other according to another embodiment of the disclosure.

In this embodiment, further, in order to make the first cathode tab 31 and the second cathode tab 32 on the production cathode electrode 3 to be aligned with each other after the winding, the following operations are carried out.

At S121, an embossing depth required in a region between the first cathode tab 31 and the second cathode tab 32, that are adjacent to one end of the production cathode electrode 3 where winding of the production cathode electrode 3 starts, on the production cathode electrode 3 is obtained according to a surplus Δ*L* between the first cathode tab 31 and the second cathode tab 32 on the experimental cathode electrode that are adjacent to one end of the experimental cathode electrode where winding of the experimental cathode electrode starts.

At S122, an embossing pressure required to be applied by the rolling device 60 to the region between the first cathode tab 31 and the second cathode tab 32 on the experimental cathode electrode is obtained according to the function relationship between the embossing depth and the embossing pressure.

In this embodiment, further, in order to make each two adjacent cathode tabs, other than the first cathode tab 31 and the second cathode tab 32 at the starting end, on the experimental cathode electrode to be aligned with each other after the winding, the following operations are carried out.

At S131, an embossing depth required in a region between the each two adjacent cathode tabs, other than the first cathode tab and the second cathode tab, on the experimental cathode electrode is obtained according to a surplus between the each two adjacent cathode tabs, other than the first cathode tab and the second cathode tab, on the experimental cathode electrode.

At S132, an embossing pressure required to be applied by the rolling device to the region between the each two adjacent cathode tabs, other than the first cathode tab and the second cathode tab, on the experimental cathode electrode is obtained according to the function relationship between the embossing depth and the embossing pressure.

It should be understood that to facilitate the thickening process of the production cathode electrode 3 by the rolling device 60, the embossing depth required in the region between the first cathode tab 31 and the second cathode tab 32 on the production cathode electrode 3 needs to be designed to be the same as the embossing depth required in the region between each two adjacent tabs that are different from the first cathode tab 31 and the second cathode tab 32 at the starting end of the production cathode electrode 3. With the same embossing depth and the different winding parameters *L₁*, *L₂*, *L₃*, *R₁*, and *R₂* for different circles of the cell 10, the surplus between each two adjacent cathode tabs of the cathode electrode 3 can be designed to be different.

Referring to FIG. 23, FIG. 23 is a schematic flow chart of obtaining a correspondence between a misalignment amount of cathode tabs and an embossing pressure according to another embodiment of the disclosure.

In some embodiments, in order to make cathode tabs on the production cathode electrode 3 to be aligned with each other after the winding, the following operations are carried out.

At S141, multiple sets of different embossing depths required to be formed by the rolling device 60 on multiple sets of experimental cathode electrodes are obtained according to the winding parameters of the winding device 40 and multiple sets of different surpluses of the multiple sets of experimental cathode electrodes.

At S142, multiple sets of different embossing pressures required to be applied by the rolling device to the multiple sets of experimental cathode electrodes are obtained according to the multiple sets of different embossing depths required by the multiple sets of experimental cathode electrodes.

At S143, multiple sets of misalignment amounts of tabs on the multiple sets of experimental cathode electrodes after winding are obtained by respectively applying the multiple sets of different embossing pressures required to the multiple sets of experimental cathode electrodes.

At S144, a correspondence between the multiple sets of misalignment amounts of the tabs on the multiple sets of experimental cathode electrodes and the multiple sets of different embossing pressures required is obtained according to the multiple sets of different embossing pressures required and the multiple sets of misalignment amounts of tabs on the multiple sets of experimental cathode electrodes.

In this embodiment, according to the winding parameters *L₁*, *L₂*, *L₃*, *R₁*, and *R₂* of the winding device 40 and multiple sets of different surpluses Δ*L* of the multiple sets of experimental cathode electrodes, multiple sets of surpluses Δ*L* of the first cathode electrode tabs 31 and the second cathode electrode tabs 32 of the production cathode electrode 3 can be designed.

Specifically, there is a quadratic function relationship between the misalignment amount of tabs on the experimental cathode electrode or of tabs on the production cathode electrode 3 and the embossing pressure; and the misalignment amount of the tabs on the experimental cathode electrode is set to be represented as *z₁*, the embossing pressure is set to be represented as *x,* where the misalignment amount *z₁* of the tabs on the cathode electrode 3 and the embossing pressure *x* satisfy: *z₁* = f*x*²+ g*x* + h, where f, g, h represent at least relation constants corresponding to a material of the production cathode electrode.

In this embodiment, the misalignment amount of the tabs on the experimental cathode electrode is set to be represented as *z₁*, the embossing pressure is set to be represented as *x,* and there is a quadratic function relationship between the misalignment amount of tabs on the experimental cathode electrode and the embossing pressure *x.* The misalignment amount *z₁* of the tabs on the cathode electrode 3 and the embossing pressure *x* satisfy: *z₁* = f*x*²+ g*x* + h, where f, g, h represent at least relation constants corresponding to the material of the experimental cathode electrode and the forgoing parameters. According to *z₁* = f*x* ²+ g*x* + h and the minimum value (i.e., zero) of the misalignment amount *z₁* of the tabs on the experimental cathode electrode 3, a determined value of the embossing pressure x, that is required to be provided by the rolling device 60 to the production cathode electrode 3, can be obtained, such that misalignment amount *z₁* of tabs of the wound cell 10 is equal to zero. At the same time, a determined value of the embossing depth *y* can be obtained according to the determined value of the embossing pressure x, so that different determined values of surpluses between different cathode tabs on the production cathode electrode 3 can be obtained according to the winding parameters *L₁*, *L₂*, *L₃*, *R₁*, and *R₂.*

Further, according to the relation constants corresponding to the material of the experimental cathode electrode and the forgoing parameters, a relationship between the misalignment amount *z₁* of the tabs on the cathode electrode 3 and the embossing pressure x is obtained and satisfies: *z₁* = -11526 *x*² + 539.27*x* + 89.426. In addition, a regression equation of the relationship satisfies: *R²* = 99.45%, indicating a high degree of correlation. Therefore, the corresponding values of the misalignment amount *z₁* of the tabs on the experimental cathode electrode or of the tabs on the production cathode electrode 3 and the embossing pressure *x* have a relatively small error.

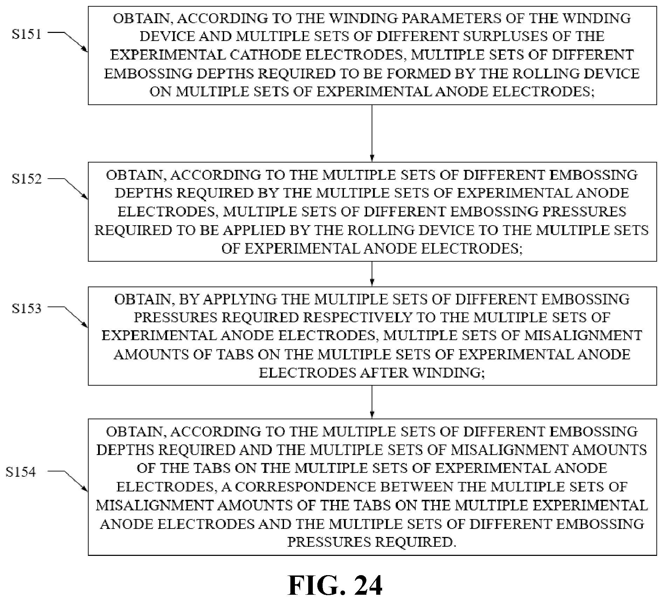

Referring to FIG. 24, FIG. 24 is schematic flow chart of obtaining a correspondence between a misalignment amount of anode tabs and an embossing pressure according to another embodiment of the disclosure.

In one embodiment, in order to make anode electrode tabs on the production anode electrode 5 to be aligned with each other after the winding, the following operations are carried out.

At S151, multiple sets of different embossing depths required to be formed by the rolling device on multiple sets of experimental anode electrodes are obtained according to the winding parameters of the winding device 40 and multiple sets of different surpluses of the experimental cathode electrodes.

At S152, multiple sets of different embossing pressures required to be applied by the rolling device 60 to the multiple sets of experimental anode electrodes are obtained according to the multiple sets of different embossing depths required by the multiple sets of experimental anode electrodes.

At S153, multiple sets of misalignment amounts of tabs on the multiple sets of experimental anode electrodes after winding are obtained by applying the multiple sets of different embossing pressures required respectively to the multiple sets of experimental anode electrodes.

At S154, a correspondence between the multiple sets of misalignment amounts of the tabs on the multiple experimental anode electrodes and the multiple sets of different embossing pressures required is obtained according to the multiple sets of different embossing depths required and the multiple sets of misalignment amounts of the tabs on the multiple sets of experimental anode electrodes.

Specifically, there is a quadratic function relationship between the misalignment amount of the tabs on the experimental anode electrode and the embossing pressure; and the misalignment amount of the tabs on the experimental anode electrode is set to be represented as *z₂*, the embossing pressure is set to be represented as *x,* where the misalignment amount *z₂* of the tabs on the experimental anode electrode and the embossing pressure *x* satisfy: *z₂* = l*x*² + m*x* + n, where l, m, n represent at least relation constants corresponding to a material of the experimental anode electrode.

In this embodiment, the misalignment amount of the tabs on the experimental anode electrode is set to be represented as *z₂*, the embossing pressure is set to be represented as *x,* there is a quadratic function relationship between the misalignment amount *z₂* of the tabs on the experimental anode electrode and the embossing pressure *x.* The misalignment amount *z₂* of the tabs on the experimental anode electrode and the embossing pressure *x* satisfy: *z₂* = l*x*² + m*x* + n, where l, m, n represent at least relation constants corresponding to the material of the experimental anode electrode and the forgoing parameters. According to *z₂* = l*x*² + m*x* + n and the minimum value (i.e., zero) of the misalignment amount *z₂* of the tabs on the experimental anode electrode, a determined value of the embossing pressure *x,* that is required to be provided by the rolling device 60, can be obtained, such that misalignment amount *z₂* of anode tabs of the wound cell 10 is equal to zero. At the same time, a determined value of the embossing depth y can be obtained according to the determined value of the embossing pressure *x,* so that different determined values of surpluses between different anode tabs on the production anode electrode 5 can be obtained according to the winding parameters *L₁*, *L₂*, *L₃*, *R₁*, and *R₂*.

Further, *z₂* = -12807*x*² + 783.37*x* + 73.748, a regression equation of the relationship satisfies: *R²* = 98.57%, indicating a high degree of correlation. Therefore, the corresponding values of the misalignment amount *z₂* of the tabs on the production anode electrode 5 and the embossing pressure x have a relatively small error.

The above embodiments are part of the embodiments of the disclosure. It should be noted that, a person of ordinary skill in the art may further make improvements and modifications without departing from the principle of the disclosure, and these improvements and modifications shall also belong to the scope of protection of the disclosure.

## Claims

1. A method for cell winding, comprising:
feeding materials (S11), comprising: obtaining a separator (1), a cathode electrode (3), and an anode electrode (5), wherein the cathode electrode (3) satisfies that: after pre-winding, a first cathode tab (31) of the cathode electrode (3) and a second cathode tab (32) of the cathode electrode (3) adjacent to the first cathode tab (31), adjacent to a terminal end of the cathode electrode (3) where winding starts, are arranged with a surplus misalignment;
preparing winding (S12), comprising: fixing a starting end of the separator (1), a starting end of the cathode electrode (3), and a starting end of the anode electrode (5) to a winding device (40);
embossing (S13), comprising: embossing the cathode electrode (3) by a rolling device (60), such that the cathode electrode (3) subjected to embossing satisfies that: the first cathode tab (31) is aligned with the second cathode tab (32) after winding; wherein during the embossing (S13), an embossing depth required by the cathode electrode (3) is calculated based on the surplus misalignment formed by the pre-winding, to enable the first cathode tab (31) and the second cathode tab (32), that are adjacent to the winding end of the cathode electrode (3), to be aligned with each other after the winding of a cell; and
the winding (S14), comprising: winding the separator (1), the cathode electrode (3), and the anode electrode (5) by the winding device (40) to form the cell.

2. The method of claim 1, wherein
during the feeding materials (S11), the surplus misalignment satisfies that: after the pre-winding, the first cathode tab (31) is positioned in a first circle of the cathode electrode (3) subjected to the pre-winding, and the second cathode tab (32) is positioned in a second circle of the cathode electrode (3) subjected to the pre-winding; and there is a surplus between the second cathode tab (32) and the first cathode tab (31), wherein the surplus is a distance from a geometric center of the first cathode tab (31) to a geometric center of the second cathode tab (32) along a winding trajectory.

3. The method of claim 2, comprising
obtaining (S31), according to the surplus and winding parameters of the winding device (40), an embossing depth formed by the rolling device (60); and
obtaining (S32), according to a correspondence between the embossing depth and an embossing pressure, the embossing pressure provided by the rolling device (60), such that the first cathode tab (31) is aligned with the second cathode tab (32) after winding of the cathode electrode (3).

4. A method for cell winding, comprising:
pre-winding (S101), comprising: obtaining and pre-winding an experimental separator, an experimental cathode electrode, and an experimental anode electrode; wherein after the pre-winding (S101) is completed, each two adjacent cathode tabs on the experimental cathode electrode are arranged with a surplus misalignment;
feeding materials (S102), comprising: obtaining a production separator (1), a production cathode electrode (3), and a production anode electrode (5); wherein the production cathode electrode (3) obtained satisfies that a distance between each two cathode tabs on the production cathode electrode (3) is equal to a distance between the each two cathode tabs on the experimental cathode electrode;
preparing winding (S103), comprising: fixing a starting end of the production separator (1), a starting end of the production cathode electrode (3), and a starting end of the production anode electrode (5) to a winding device (40);
embossing (S104), comprising: embossing the production cathode electrode (3) by a rolling device (60) to enable the production cathode electrode (3) subjected to embossing to satisfy that: cathode tabs on the production cathode electrode (3) are aligned with each other after winding; wherein during the embossing (S104), an embossing depth required by the production cathode electrode (3) is calculated based on the surplus misalignment between the each two adjacent cathode tabs on the experimental cathode electrode after the pre-winding (S101), to enable the each two adjacent cathode tabs on the production cathode electrode (3) to be aligned with each other after the winding; and
winding (S105), comprising: winding the production separator (1), the production cathode electrode (3), and the production anode electrode (5) by the winding device (40) to form a cell.

5. The method of claim 4, wherein during the pre-winding (S101), the surplus misalignment satisfies that: after the pre-winding (S101), in the each two adjacent cathode tabs on the experimental cathode electrode, one cathode tab is positioned in a first circle, and another cathode tab is positioned in a second circle; there is a surplus between the one cathode tab positioned in the first circle and the another cathode tab positioned in the second circle, wherein the surplus is a distance from a geometric center of the one cathode tab positioned in the first circle to a geometric center of the another cathode tab positioned in the second circle along a winding trajectory.

6. The method of claim 5, wherein
obtaining (S111), according to the surplus and winding parameters of the winding device (40), an embossing depth required to be formed by the rolling device (60);
obtaining (S112) a correspondence between the embossing depth and an embossing pressure by presetting and fixing material parameters of the experimental cathode electrode and parameters of the rolling device (60) and applying a plurality of sets of different embossing pressures to a plurality of sets of experimental cathode electrodes; and
obtaining (S113), according to the correspondence between the embossing depth required and the embossing pressure, an embossing pressure required to be provided by the rolling device (60) to enable the cathode tabs on the production cathode electrode (3) to be aligned with each other after the winding of the production cathode electrode (3).

7. The method of claim 6, wherein
there is a cubic function relationship between the embossing depth and the embossing pressure; and
the embossing depth is set to be represented as y, the embossing pressure is set to be represented as x, and the embossing depth y and the embossing pressure x satisfy a function relationship: *y* = a*x*³ + b*x*² + cx + d, wherein a, b, c, and d represent relation constants corresponding to the material parameters of the experimental cathode electrode and the parameters of the rolling device (60).

8. The method of claim 7, comprising
obtaining (S121) an embossing depth required in a region between a first cathode tab (31) and a second cathode tab (32), that are adjacent to one end of the production cathode electrode (3) where winding of the production cathode electrode (3) starts, on the production cathode electrode (3) according to a surplus between a first cathode tab (31) and a second cathode tab (32) on the experimental cathode electrode that are adjacent to one end of the experimental cathode electrode where winding of the experimental cathode electrode starts; and
obtaining (S122) an embossing pressure required to be applied by the rolling device (60) to the region between the first cathode tab (31) and the second cathode tab (32) on the experimental cathode electrode according to the function relationship between the embossing depth and the embossing pressure.

9. The method of claim 8, comprising:
obtaining (S131) an embossing depth required in a region between each two adjacent cathode tabs, other than the first cathode tab (31) and the second cathode tab (32), on the experimental cathode electrode according to a surplus between the each two adjacent cathode tabs, other than the first cathode tab (31) and the second cathode tab (32), on the experimental cathode electrode; and
obtaining (S132) an embossing pressure required to be applied by the rolling device (60) to the region between the each two adjacent cathode tabs, other than the first cathode tab (31) and the second cathode tab (32), on the experimental cathode electrode according to the function relationship between the embossing depth and the embossing pressure.

10. The method of claim 6, wherein
obtaining (S141) a plurality of sets of different embossing depths required to be formed by the rolling device (60) on a plurality of sets of experimental cathode electrodes according to the winding parameters of the winding device (40) and a plurality of sets of different surpluses of the plurality of sets of experimental cathode electrodes;
obtaining (S142) a plurality of sets of different embossing pressures required to be applied by the rolling device (60) to the plurality of sets of experimental cathode electrodes according to the plurality of sets of different embossing depths required by the plurality of sets of experimental cathode electrodes;
obtaining (S143) a plurality of sets of misalignment amounts of tabs on the plurality of sets of experimental cathode electrodes after winding by respectively applying the plurality of sets of different embossing pressures required to the plurality of sets of experimental cathode electrodes; and
obtaining (S144) a correspondence between the plurality of sets of misalignment amounts of the tabs on the plurality of sets of experimental cathode electrodes and the plurality of sets of different embossing pressures required according to the plurality of sets of different embossing pressures required and the plurality of sets of misalignment amounts of tabs on the plurality of sets of experimental cathode electrodes.

11. The method of claim 10, wherein
there is a quadratic function relationship between the misalignment amount of the tabs on the experimental cathode electrode and the embossing pressure; and
the misalignment amount of the tabs on the experimental cathode electrode is set to be represented as *z₁*, the embossing pressure is set to be represented as x, where the misalignment amount *z₁* of the tabs on the experimental cathode electrode and the embossing pressure x satisfy: *z₁* = f*x*²+ g*x* + h, wherein f, g, h represent relation constants corresponding to a material of the experimental cathode electrode.

12. The method of claim 6, comprising:
obtaining (S151) a plurality of sets of different embossing depths required to be formed by the rolling device (60) on a plurality of sets of experimental anode electrodes according to the winding parameters of the winding device (40) and a plurality of sets of different surpluses of the experimental cathode electrodes;
obtaining (S152) a plurality of sets of different embossing pressures required to be applied by the rolling device (60) to the plurality of sets of experimental anode electrodes according to the plurality of sets of different embossing depths required by the plurality of sets of experimental anode electrodes;
obtaining (S153) a plurality of sets of misalignment amounts of tabs on the plurality of sets of experimental anode electrodes after winding by applying the plurality of sets of different embossing pressures required respectively to the plurality of sets of experimental anode electrodes; and
obtaining (S154) a correspondence between the plurality of sets of misalignment amounts of the tabs on the plurality of experimental anode electrodes and the plurality of sets of different embossing pressures required according to the plurality of sets of different embossing depths required and the plurality of sets of misalignment amounts of the tabs on the plurality of sets of experimental anode electrodes.

13. The method of claim 12, wherein
there is a quadratic function relationship between the misalignment amount of the tabs on the experimental anode electrode and the embossing pressure; and
the misalignment amount of the tabs on the experimental anode electrode is set to be represented as *z₂*, the embossing pressure is set to be represented as x, wherein the misalignment amount *z₂* of the tabs on the experimental anode electrode and the embossing pressure x satisfy: *z₂* = l*x*² + m*x* + n, wherein l, m, n represent relation constants corresponding to a material of the experimental anode electrode.

14. A system for cell winding, comprising:
a pre-winding device configured to obtain an experimental separator, an experimental cathode electrode, and an experimental anode electrode and to complete a pre-winding, wherein after the pre-winding is completed, each two adjacent cathode tabs on the experimental cathode electrode are arranged with a surplus misalignment;
a feeding device (20) configured to provide a production separator (1), a production cathode electrode (3), and a production anode electrode (5), wherein the production cathode electrode (3) provided satisfies that: a distance between each two adjacent cathode tabs on the production cathode electrode (3) is equal to a distance between the each two adjacent cathode tabs on the experimental cathode electrode;
a rolling device (60) configured to emboss the production cathode electrode (3) to enable the production cathode electrode (3) subjected to embossing to satisfy that: cathode tabs on the production cathode electrode (3) are aligned with each other after winding; and
a winding device (40) configured to fix a starting end of the production separator (1), a starting end of the production cathode electrode (3), and a starting end of the production anode electrode (5) and to wind the production separator (1), the production cathode electrode (3), and the production anode electrode (5).

15. The system (100) for cell winding of claim 14, wherein
the rolling device (60) comprises a support (61), a first compression roller (62), a first driver (63), a second compression roller (64), a second driver (65), and a control valve (66);
the first compression roller (62) is rotatably disposed on the support (61);
the first driver (63) is configured to rotate the first compression roller (62);
the second compression roller (64) is rotatably disposed on the support (61), and the second compression roller (64) is parallel to the first compression roller (62);
the second driver (65) is configured to drive the first compression roller (62) to move towards or away from the second compression roller (64) to adjust an embossing pressure of the rolling device (60); and
the control valve (66) is electrically connected to the second driver (65) and configured to control the second driver (65) to drive the first compression roller (62) to move towards or away from the second compression roller (64).
